# EUROPÄISCHE PATENTSCHRIFT

(11) **EP 3 356 694 B1**
(45) Veröffentlichungstag und Bekanntmachung des Hinweises auf die Patenterteilung: **06.11.2019**
(21) Anmeldenummer: 16759973.7
(22) Anmeldetag: 11.08.2016
(51) Int. Cl.: F16C 33/58, F16C 33/64, F16C 19/10

(54) **UMGEFORMTER RING FÜR WÄLZLAGER**
RESHAPED RING FOR ROLLING BEARING
BAGUE FAÇONNÉE POUR ROULEMENT

(30) Priorität: 28.09.2015 DE 102015218543
(43) Veröffentlichungstag der Anmeldung: 08.08.2018
(73) Patentinhaber: Schaeffler Technologies AG & Co. KG, 91074 Herzogenaurach (DE)
(72) Erfinder: PEDROTTI, Heinz, 97456 Dittelbrunn (DE); KELLER, Torsten, 91093 Heßdorf (DE); OTT, Winfried, 97215 Auernhofen (DE)
(86) Internationale Anmeldenummer: PCT/DE2016/200371
(87) Internationale Veröffentlichungsnummer: WO 2017/054807

(56) Entgegenhaltungen:
- EP-A1- 0 042 078
- DE-A1-102011 006 020

## Beschreibung

Die Erfindung betrifft einen Lagerring für ein Wälzlager, wobei der Lagerring eine Hauptachse definiert, wobei der Lagerring als ein Hohlring mit einem die Hauptachse umlaufenden Hohlraum ausgebildet ist, wobei in einem Axialschnitt entlang der Hauptachse die Wand des Hohlrings einstückig und/oder nahtlos ausgebildet ist, wobei der Lagerring zum Abwälzen von Wälzkörpern ausgebildet ist und wobei die Wand einen Laufbahnabschnitt zum Abwälzen der Wälzkörper, einen Lagerbodenabschnitt zur Auflage des Lagerrings, zwei Seitenstützwandabschnitte und zwei Verbindungsabschnitte zum Verbinden der zwei Seitenstützwandabschnitte mit dem Laufbahnabschnitt aufweist.

Wälzlager stellen eine wichtige Komponente im Bau von Maschinen dar, in denen Baugruppen oder Bauteile gegeneinander geschwenkt oder gedreht werden müssen. Vor allem in der Automobilindustrie finden Wälzlager daher großen Absatz in unterschiedlichen Größen und Ausgestaltungsformen. Es ist daher wünschenswert die Komponenten von Wälzlagern möglichst materialsparend und kostengünstig herstellen zu können.

Beispielsweise offenbart die Druckschrift DE 10 2009 036 347 A1 ein Verfahren zur Herstellung einer Bordscheibe für ein Pendelrollenlager. Bei dem Verfahren wird zunächst ein gerader Rohrabschnitt zu einem Ring mit zwei durch einen Spalt getrennten Ringenden gebogen, dessen beide Ringenden im Anschluss daran gefügt werden. Der so in sich geschlossene, beispielsweise verschweißte Ring-Vorformling wird abschließend in einer Pressvorrichtung mit einem geeigneten Konturwerkzeug einzugig in eine Bordscheibe mit der gewünschten, in der Regel von einer Kreisform abweichenden Axialschnittgeometrie umgeformt.

Die DE 10 2011 006 020 A1 beschreibt ein Wälzlager mit mindestens einem Außenring und mindestens einem Innenring, wobei zumindest einer dieser Lagerringe mindestens einen Hohlraum aufweist, der zumindest teilweise mit einer Substanz befüllt. Die Substanz vollzieht bei einer Änderung mindestens eines Umgebungsparameters einen irreversiblen Phasenwechsel. Die Substanz ist beispielsweise ein duroplastisches Kunststoffmaterial.

Die EP 0 042 078 A1 offenbart ein Großwälzlager in Leichtbauweise. Es besitzt gerundete und an den Enden zusammengefügte Lagerringe, die im Querschnitt gesehen geschlossene Hohlprofile bilden. Ihre Endform erhalten die Lagerringe durch spanloses Umformen.

Es ist Aufgabe der vorliegenden Erfindung, einen Lagerring für Wälzlager, ein Wälzlager mit mindestens einem derartigen Lagerring und ein Verfahren zur Herstellung des Lagerrings vorzuschlagen, welcher eine materialsparende und kostengünstige Produktion ermöglicht.

Diese Aufgabe wird durch einen Lagerring für ein Wälzlager mit den Merkmalen des Anspruchs 1, durch ein Wälzlager mit mindestens einem derartigen Lagerring mit den Merkmalen des Anspruchs 3 und durch ein Verfahren zur Herstellung des Lagerrings mit den Merkmalen des Anspruchs 5 gelöst. Bevorzugte oder vorteilhafte Ausführungsformen der Erfindung ergeben sich aus den Unteransprüchen der nachfolgenden Beschreibung, sowie den beigefügten Figuren.

Im Rahmen der Erfindung wird ein Lagerring für ein Wälzlager vorgeschlagen. Der Lagerring definiert eine Hauptachse, wobei die Hauptachse axial durch den Mittelpunkt des Lagerrings verläuft. Der Lagerring ist insbesondere als ein Rotationskörper ausgebildet, welcher in Umlaufrichtung ein konstantes Axialschnittprofil aufweist. Der Lagerring ist vorzugsweise aus Metall, insbesondere aus einem Stahlwerkstoff, im Speziellen aus einem Stahlwerkstoff mit der Bezeichnung E235, z.B. aus einem normalgeglühten Stahlwerkstoff mit der Bezeichnung E235+N ausgebildet. Optional kann der Lagerring mit Kunststoff umspritzt sein.

Der Lagerring ist als ein Hohlring ausgebildet. Der Hohlring weist einen Hohlraum auf, wobei der Hohlraum die Hauptachse insbesondere ununterbrochen umläuft. Die Wand des Hohlrings ist im Axialschnitt einstückig, umlaufend geschlossen und/oder nahtlos ausgebildet. Alternativ oder ergänzend ausgedrückt bildet die Wand des Hohlrings im Axialschnitt eine geschlossene Kurve um den Hohlraum. Der Lagerring ist einstückig ausgebildet.

Der Lagerring ist zum Abwälzen von Wälzkörpern, insbesondere von Kugeln ausgebildet. es ist ein Vorteil der Erfindung, dass der Lagerring im Vergleich zu umgeformten Ringen oder Blechringen einfach und materialsparend hergestellt werden kann. Dabei kann trotzdem eine für viele Anwendungen ausreichende Formtreue und damit niedrige Toleranzen eingehalten werden.

Gemäß der Erfindung weist die Wand des Lagerrings einen Laufbahnabschnitt auf. Der Laufbahnabschnitt bildet die Wälzfläche für die Wälzkörper. Insbesondere wird der Laufbahnabschnitt durch Drucklinien des Wälzlagers durchstoßen. Der Laufbahnabschnitt ist vorzugsweise als eine Rille ausgebildet. Die Rille ist als eine in Umlaufrichtung verlaufende Vertiefung, insbesondere Nut ausgebildet. Die Rille verläuft vollständig um die Hauptachse. Die Rille weist Rillenwände und einen Rillenboden auf. Beispielsweise ist die Rille u-förmig ausgebildet. Die Wälzkörper, insbesondere die Kugeln, bilden einen Kontaktbereich mit der u-förmig ausgebildeten Rille insbesondere am Rillenboden. Alternativ ist die Rille v-förmig ausgebildet. Die Wälzkörper, insbesondere die Kugeln, bilden Kontaktbereiche mit der v-förmig ausgebildeten Rille, insbesondere an den Rillenwänden. Die Rille ist insbesondere ausgebildet die Wälzkörper, insbesondere die Kugeln, aufzunehmen. Die Rille ist als Führung für die Wälzkörper ausgebildet, insbesondere als axiale Führung entlang der Umlaufrichtung um die Hauptachse. Die Wälzkörper, insbesondere die Kugeln, wälzen in der Rille und damit auf dem Laufbahnabschnitt ab.

Prinzipiell kann der Lagerring als ein Radiallagerring ausgebildet sein. Mit Blick auf eine einfache Fertigung ist es jedoch besonders bevorzugt, dass der Lagerring als ein Axiallagerring ausgebildet und/oder die Rille in einer axialen Richtung geöffnet ist.

Gemäß der Erfindung weist die Wand des Lagerrings einen Lagerbodenabschnitt auf. Der Lagerbodenabschnitt ist dem Laufbahnabschnitt gegenüberliegend angeordnet. Der Lagerbodenabschnitt bildet eine Bodenfläche, welche vorzugsweise plan oder eben ausgebildet. Der Bodenfläche erstreckt sich insbesondere in einer Radialebene zur Hauptachse. Der Lagerbodenabschnitt ist ausgebildet, den Lagerring und damit das Axialwälzlager an einer Stützkonstruktion, insbesondere einem Lagerpartner, über die Bodenfläche abzustützen.

Die Wand des Lagerrings weist weiterhin zwei Seitenstütz-wandabschnitte auf. Die zwei Seitenstützwandabschnitte bilden jeweils eine Zylinderfläche. Die zwei Seitenstützwandabschnitte und/oder die Zylinderflächen sind koaxial zur Hauptachse des Lagerrings angeordnet. Die zwei Seitenstützwandabschnitte weisen je einen Übergangsbereich auf, wobei je ein derartiger Übergangsbereich jeweils einen der zwei Seitenstützwandabschnitte mit einem der Enden des Lagerbodenabschnittes verbindet. Die Übergangsbereiche sind gebogen ausgebildet. Die zwei Seitenstützwandabschnitte sind insbesondere senkrecht oder in etwa senkrecht zum Lagerbodenabschnitt angeordnet.

Der Lagerring weist zwei Verbindungsabschnitte auf. Die zwei Verbindungsabschnitte verbinden jeweils einen der zwei Seitenstützwandabschnitte mit dem Laufbahnabschnitt. Die Verbindungsabschnitte sind im Axialschnitt gewinkelt oder als Eckbereiche ausgebildet. Vorzugsweise weist mindestens einer der zwei Verbindungsabschnitte eine Anlauffläche auf. Die Anlauffläche ist insbesondere am radial äußeren Verbindungsabschnitt angeordnet. Im Speziellen ist die Anlauffläche senkrecht zur Hauptachse ausgerichtet und/oder liegt in einer Radialebene zu der Hauptachse. Die Anlauffläche ist beispielsweise zur Führung eines Käfigs für die Wälzkörper und/oder zur Auflage einer Dichtscheibe ausgebildet. Vorzugsweise ist die Anlauffläche geprägt.

Die zwei Seitenstützwandabschnitte tragen die zwei Verbindungsabschnitte und damit den Laufbahnabschnitt. Im Axialschnitt bilden der Lagerbodenabschnitt, die zwei Seitenstützwandabschnitte, die zwei Verbindungsabschnitte und der Laufbahnabschnitt gemeinsam die geschlossen umlaufende Wand, wobei die Wand in dem Axialschnitt ununterbrochen und/oder lückenlos ausgebildet ist.

Erfindungsgemäß weist der Hohlraum zwei Hohlraumabschnitte auf. Die Hohlraumabschnitte sind von dem Laufbahnabschnitt, dem Lagerbodenabschnitt, den zwei Seitenstützwandabschnitten und den zwei Verbindungsabschnitten eingeschlossen und voneinander durch den Laufbahnabschnitt abgeteilt, insbesondere getrennt. Die Hohlraumabschnitte können miteinander verbunden oder voneinander getrennt angeordnet sein. Die Hohlraumabschnitte sind im Axialschnitt dreiecksförmig ausgebildet, insbesondere rechtwinkelig dreiecksförmig ausgebildet, wobei die Ecken insbesondere teilweise abgerundet sind. Die zwei Hohlraumabschnitte sind im Axialschnitt einander gegenüberliegend angeordnet. Die zwei Hohlraumabschnitte sind im Axialschnitt insbesondere zueinander spiegelbildlich ausgebildet. Im Lagerring sind die zwei Hohlraumabschnitte koaxial angeordnet.

Erfindungsgemäß liegt die Unterseite des Laufbahnabschnitts auf der Oberseite des Lagerbodenabschnitts auf. Der Lagerbodenabschnitt stützt den Laufbahnabschnitt. Insbesondere verringert das Aufliegen des Laufbahnabschnitts auf den Lagerbodenabschnitt die Belastung auf den Laufbahnabschnitt, den zwei Verbindungsabschnitten und/oder den zwei Seitenstützwandabschnitten. Diese alternative Weiterbildung führt zu einer stabileren Ausgestaltung. Belastungen auf den Lagerring können jedoch durch ein Ausfedern des Laufbahnabschnitts in die Hohlraumabschnitte elastisch ausgefedert werden.

Ein weiterer Gegenstand der Erfindung betrifft ein Wälzlager, wobei das Wälzlager mindestens einen derartigen erfinungsgemäßen Lagerring aufweist, wie dieser zuvor beschrieben wurde. Das Wälzlager kann als Radialwälzlager ausgebildet sein, besonders bevorzugt ist das Wälzlager jedoch als ein Axialwälzlager und im Speziellen als ein Axialkugellager ausgebildet. Es ist möglich, dass das Wälzlager nur einen derartigen Lagerring aufweist. Alternativ kann das Wälzlager zwei derartige Lagerringe oder - bei mehrreihigen Wälzlagern - mehr als zwei derartige Lagerringe aufweisen. Bevorzugt ist das Axialwälzlager für Lastkraftfahrzeuge und/oder Flurförderzeuge, beispielsweise als Federbeinlager oder Ausrücklager, oder für Gabelstapler geeignet und/oder ausgebildet.

Das Wälzlager umfasst die Wälzkörper, insbesondere die Kugeln, wobei die Wälzkörper auf dem Lagerring abwälzend angeordnet sind. Optional ergänzend umfasst das Wälzlager einen Käfig für die Wälzkörper und/oder eine Dichtscheibe zum Abdichten des Wälzlagers vor Verschmutzungen. Bei dieser Weiterbildung ist es bevorzugt, dass der Lagerring die, insbesondere geprägte, Anlauffläche zur Auflage des Dichtrings und/oder des Käfigs aufweist.

Ein weiterer Gegenstand der Erfindung betrifft ein Verfahren zur Herstellung des erfindungsgemäßen Lagerrings, wie dieser zuvor beschrieben wurde. Der Lagerring wird aus einem Ring-Vorformling gefertigt. Der Ring-Vorformling ist als ein hohler Torus und/oder als ein Donut ausgebildet, insbesondere als ein ringförmiges Rohr. Der Ring-Vorformling wird durch ein Formpresswerkzeug, insbesondere in einer Passform zu dem Lagerring umgeformt. Ein normalgeglühter Stahlwerkstoff begünstigt hierbei das Ergebnis des Umformprozesses. Das Umformen des Ring-Vorformlings in den Lagerring ist spanlos und ermöglicht eine zeitsparende und damit kostengünstige Herstellung des Lagerrings.

In einer Weiterbildung der Erfindung wird der Ring-Vorformling aus einem geraden Rohr hergestellt. Das gerade Rohr wird zu dem Ring-Vorformling, insbesondere dem ringförmigen Rohr, vorzugsweise durch eine Dreirollen-Rundbiegemaschine, geformt. Die Ringenden des Ring-Vorformlings werden miteinander verbunden, insbesondere durch ein thermisches Verfahren miteinander verbunden, im Speziellen miteinander verschweißt. Als Schweißverfahren können insbesondere autogenes Schweißen, Widerstandsschweißen oder Orbitalschweißen ohne Zusatzwerkstoffe zur Anwendung kommen, wobei hierdurch besonders belastbare Schweißnähte entstehen.

In einer möglichen Weiterentwicklung der Erfindung wird der Lagerring nach dem Umformen beispielsweise durch Schleifen weiterbearbeitet. Insbesondere können hierdurch Unebenheiten oder Fehler, welche beim Umformen entstehen, ausgeglichen werden. Weiterführend kann durch die Nachbearbeitung die Verbindungsnaht der zwei Rohrenden geglättet werden.

In einer bevorzugten Weiterentwicklung der Erfindung weist mindestens einer der zwei Verbindungsabschnitte die Anlauffläche auf. Die Anlauffläche wird entweder gemeinsam mit der Form des Lagerrings erzeugt oder durch Nachbearbeitung, beispielsweise durch Prägen geformt. Die Anlauffläche ist vorzugsweise derart ausgebildet, dass ein Käfig oder eine Dichtscheibe an der Anlauffläche angeordnet sein kann.

In einer optionalen Weiterentwicklung der Erfindung wird der Lagerring gehärtet. Dies erfolgt beispielsweise durch Wärmebehandlung insbesondere durch Vergüten, wobei durch das Vergüten Härten von bis zu 50 HRC ermöglicht werden. Alternativ kann das Härten durch Nitrocarburierung des Lagerrings erfolgen.

In einer weiteren möglichen Weiterentwicklung der Erfindung wird der Lagerring durch nachträgliche Beschichtung vor äußeren Einflüssen geschützt. Bevorzugt wird der Lagerring durch Umspritzen mit Kunststoff vor beispielsweise Korrosion geschützt.

Weitere Merkmale, Vorteile und Wirkungen der Erfindung ergeben sich aus der nachfolgenden Beschreibung bevorzugter Ausführungsbeispiele der Erfindung, sowie der beigefügten Figuren. Dabei zeigt:
- Figur 1: ein Axialschnittprofil eines Lagerrings
- Figur 2: ein Flussdiagramm der wichtigsten Verfahrensschritte zur Herstellung eines Lagerrings

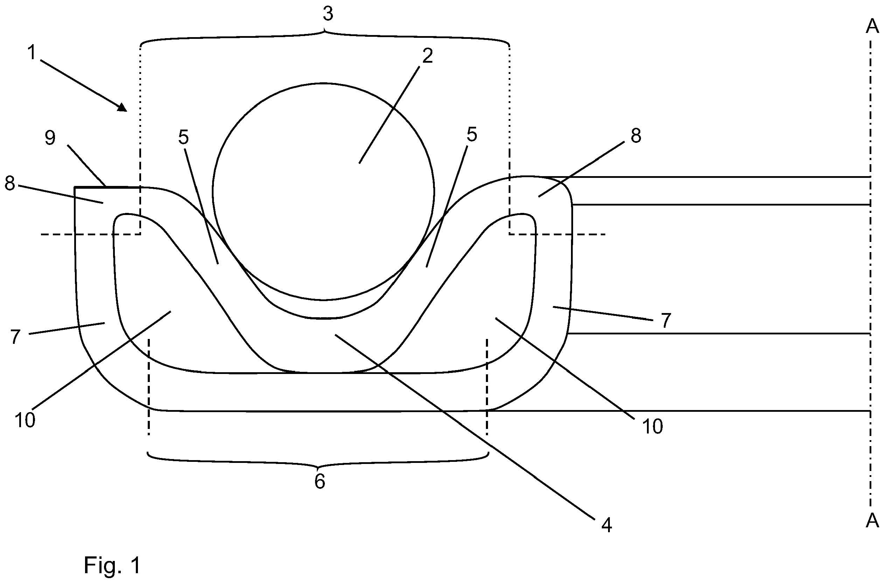

Die Figur 1 zeigt das Profil eines Lagerrings 1 in einem Axialschnitt entlang einer Hauptachse A als ein Ausführungsbeispiel der Erfindung. Auf den Lagerring 1 ist eine Kugel 2 als Wälzkörper auf- oder eingelegt. Das Profil, insbesondere das Axialschnittprofil, ist umlaufend um die Hauptachse A konstant oder gleichbleibend ausgebildet. Der Lagerring 1 ist damit als ein Rotationskörper des Axialschnittprofils um die Hauptachse A ausgebildet.

Der Lagerring 1 weist einen Laufbahnabschnitt 3, zum Abwälzen der Kugel 2 auf. Der Laufbahnabschnitt 3 ist als eine Rille, insbesondere Nut, ausgebildet und in axialer Richtung zu der Hauptachse A geöffnet. Die Rille ist als eine Führung für die Kugel ausgebildet. Die Rille ist v-förmig geformt und weist einen Rillenboden 4 und zwei Rillenwände 5 auf. Die Rillenwände 5 sind leicht konvex ausgebildet. Der Rillenboden 4 ist derart tief ausgebildet, dass die Kugel 2 den Rillenboden 4 nicht berührt. Hierdurch ergibt sich ein kleiner Kontaktbereich zwischen der Kugel 2 und der Rille des Laufbahnabschnitts 3, insbesondere der Rillenwände 5, wodurch die Reibung gering gehalten wird.

Der Lagerring 1 weist einen Lagerbodenabschnitt 6 auf. Der Lagerbodenabschnitt 6 ist plan ausgebildet und senkrecht zur Hauptachse A ausgerichtet. Der Lagerbodenabschnitt 6 dient zur Auflage und/oder Befestigung des Lagerrings 1 und damit des Wälzlagers auf einer Stützkonstruktion und/oder einem Lagerpartner. Die ebene Form des Lagerbodenabschnitts 6 ermöglicht einen stabilen Stand auf der Stützkonstruktion und/oder eine stabile Befestigung.

Der Lagerbodenabschnitt 6 ist dem Laufbahnabschnitt 3 axial gegenüberliegend angeordnet. Insbesondere weist der Laufbahnabschnitt 3 in eine axiale Richtung und der Lagerbodenabschnitt 6 in die andere axiale Richtung. Der Laufbahnabschnitt 3 liegt bei diesem Ausführungsbeispiel auf dem Lagerbodenabschnitt 6 auf und wird vom Lagerbodenabschnitt 6 gestützt.

Der Lagerring 1 weist weiterhin zwei Seitenstützwandabschnitte 7 auf. Die Seitenstützwandabschnitte 7 sind jeweils mit einer Seite des Lagerbodenabschnitts 6 verbunden. Hierfür ist das mit dem Lagerboden 6 verbindende Ende der Seitenstützwandabschnitte 7 gebogen ausgebildet. Die Seitenstützwandabschnitte 7 sind senkrecht zum Lagerbodenabschnitt 6 und/oder koaxial zu der Hauptachse A angeordnet.

Der Lagerring 1 weist zwei Verbindungsabschnitte 8 auf. Die zwei Verbindungsabschnitte 8 verbinden jeweils einen der zwei Seitenstützwandabschnitte 7 mit einem der beiden Enden des Laufbahnabschnitts 3. Die Verbindungsabschnitte 8 sind rechtwinkelig ausgebildet.

Der radialaußenliegende, von der Hauptachse A weiter entfernte der zwei Verbindungsabschnitte 8 weist eine Anlauffläche 9 auf. Die Anlauffläche 9 ist beispielsweise beim Umformprozess geprägt geformt. Alternativ ist die Anlauffläche 9 in einer Nachbearbeitung geprägt geformt. Die Anlauffläche 9 ist plan ausgebildet und bildet eine Ebene, wobei die Ebene senkrecht zur Hauptachse A ausgerichtet ist. Der radialaußenliegende Verbindungsabschnitt 8 bildet mit der Anlauffläche 9 eine im Vergleich zu dem radialinnenliegenden Verbindungsabschnitt 8 Kante mit einem kleineren Kantenradius. Die Anlauffläche 9 dient zur Auflage oder zur Führung von einem Käfig für die Kugeln 2 und/oder von einem Dichtring zum Abdichten des Wälzlagers.

Der Laufbahnabschnitt 3, der Lagerbodenabschnitt 6, die zwei Seitenstützwandabschnitte 7 und die zwei Verbindungsabschnitte 8 bilden einen Hohlraum. Der Hohlraum weist zwei voneinander getrennte Hohlraumabschnitte 10 auf. Insbesondere wird je einer der zwei Hohlraumabschnitte 10 von dem Laufbahnabschnitt 3, dem Lagerbodenabschnitt 6, einem der zwei Seitenstützwandabschnitte 7 und einem der zwei Verbindungsabschnitte 8 eingeschlossen.

Die Hohlraumabschnitte 10 sind im Axialschnitt dreiecksförmig mit teilweise abgerundeten Ecken ausgebildet. Die Hohlraumabschnitte 10 sind durch den auf dem Lagerbodenabschnitt 6 aufliegenden Laufbahnabschnitt 3 voneinander getrennt.

Durch Änderung der Form der Hohlraumabschnitte 10 können beispielsweise Axialkräfte, die auf der Kugel 2 und damit auf dem Laufbahnabschnitt 3, insbesondere den Rillenwänden 5 wirken, abgefedert werden. Weiterhin verringern die Hohlraumabschnitte 10 im Vergleich zu einer massiven Bauweise das Gewicht des Lagerrings 1 und damit das Gewicht des Wälzlagers.

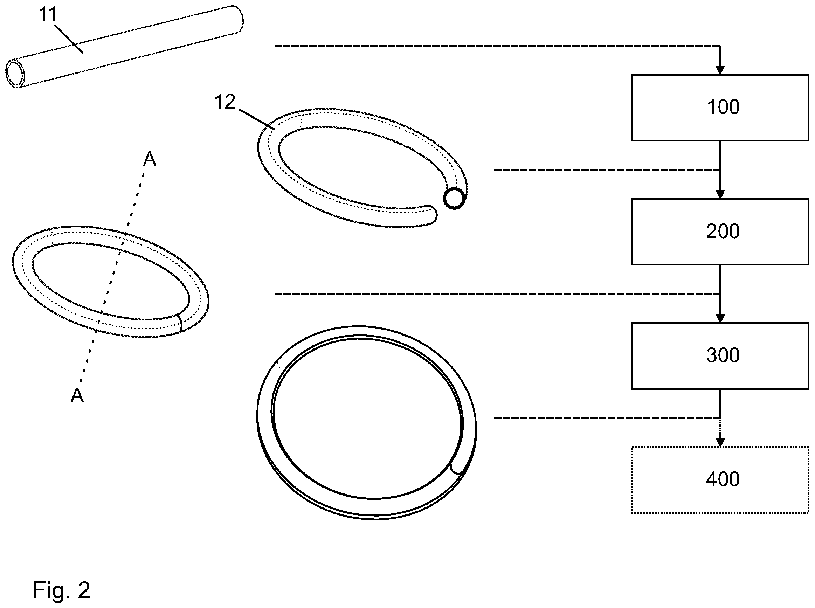

Figur 2 zeigt in einem Flussdiagramm Verfahrensschritte bei der Herstellung des Lagerrings 1 aus einem geraden Rohr 11. Gezeigt sind drei Verfahrensschritte und ein optionaler vierter Verfahrensschritt. Ausgehend von dem geraden Rohr 11 wird in einem ersten Verfahrensschritt 100 das gerade Rohr 11 zu einem offenen Ring gebogen. Die Verformung des geraden Rohrs 11 zu dem offenen Ring 12 erfolgt beispielsweise durch eine Dreirollen-Rundbiegemaschine.

In einem zweiten Verfahrensschritt 200 werden die Enden des zu dem offenen Ring 12 gebogenen Rohrs miteinander zu einem Ring-Vorformling 13 verbunden. Das Verbinden erfolgt beispielsweise durch ein thermisches Verbinden, insbesondere durch Verschweißen. Der Ring-Vorformling ist als ein torusförmiger oder donutförmiger Hohlring ausgebildet.

In einem dritten Verfahrensschritt 300 wird der Ring-Vorformling 13 umgeformt. Hierbei wird die obere Ringwand des Ring-Vorformlings 13 axial eingedrückt, bis die obere Ringwand des Ring-Vorformlings auf die untere Ringwand des Ring-Vorformlings 13 aufliegt. Die obere Ringwand wird zu einer Vertiefung umgeformt, bis sich der Laufbahnabschnitt 3 mit der Rille bildet. Die seitlichen Ringwände bleiben bestehen und werden zu den Seitenstützwänden 7. Die untere Ringwand wird etwas breiter und flacher umgeformt, bis sie den Lagerbodenabschnitt 6 bildet. Der Ring-Vorformling 13 wird derart umgeformt, dass sich ein Axialschnittprofil gemäß Figur 1 ergibt.

Beispielsweise wird der Ring-Vorformling in eine Gegenform eingebracht und mittels eines Stempels derart eingedrückt, dass der Ring-Vorformling 13 in den Lagerring 1 mit Rille umgeformt wird. Hierbei ist es möglich den Laufbahnabschnitt 3 des Lagerrings 1 derart umzuformen, dass der Laufbahnabschnitt 3 auf dem Lagerbodenabschnitt 6 aufliegt. Alternativ kann zwischen Laufbahnabschnitt 3 und Lagerbodenabschnitt 6 ein Abstand gehalten werden.

Die Verfahrensschritte 100 bis 300 eignen sich insbesondere für Lagerringe 1 von Wälzlagern mit einem Durchmesser von mehr als 100 mm, bevorzugt bis zu Durchmessern von 1500 mm.

In einem optionalen vierten Verfahrensschritt 400 wird der Lagerring 1 nachbearbeitet. Der Lagerring wird beispielsweise durch Schleifen nachbearbeitet. Optional ergänzend weist der Lagerring 1 die Anlauffläche 9 auf, wobei die Anlauffläche 9 insbesondere durch Prägen ausgebildet wird. Die Anlauffläche 9 dient beispielsweise zur Auflage eines Käfigs für die Wälzkörper, insbesondere für die Kugeln, und/oder zur Auflage eines Dichtungsrings zum Schutz der Wälzkörper vor Verschmutzung.

### Bezugszeichenliste

- 1: Lagerring
- 2: Kugel
- 3: Laufbahnabschnitt
- 4: Rillenboden
- 5: Rillenwand
- 6: Lagerbodenabschnitt
- 7: Seitenstützwandabschnitt
- 8: Verbindungsabschnitt
- 9: Anlauffläche
- 10: Hohlraumabschnitt
- 11: gerades Rohr
- 12: offener Ring
- 13: Ring-Vorformling

- A: Hauptachse

## Patentansprüche

1. Lagerring (1) für ein Wälzlager, wobei der Lagerring (1) eine Hauptachse (A) definiert, wobei der Lagerring (1) als ein Hohlring mit einem die Hauptachse (A) umlaufenden Hohlraum ausgebildet ist, wobei in einem Axialschnitt entlang der Hauptachse (A) eine Wand des Hohlrings einstückig und/oder nahtlos ausgebildet ist, wobei der Lagerring (1) zum Abwälzen von Wälzkörpern ausgebildet ist, wobei die Wand einen Laufbahnabschnitt (3) zum Abwälzen der Wälzkörper, einen Lagerbodenabschnitt (6) zur Auflage des Lagerrings (1), zwei Seitenstützwandabschnitte (7) und zwei Verbindungsabschnitte (8) zum Verbinden der zwei Seitenstützwandabschnitte (7) mit dem Laufbahnabschnitt (3) aufweist, **dadurch gekennzeichnet, dass** der Hohlraum zwei Hohlraumabschnitte (10) aufweist, wobei die Wand die zwei Hohlraumabschnitte (10) einschließt, und dass der Laufbahnabschnitt (3) auf dem Lagerbodenabschnitt (6) aufliegt, wobei der Lagerbodenabschnitt (6) den Laufbahnabschnitt (3) stützt.

2. Lagerring (1) nach den Ansprüchen 1, **dadurch gekennzeichnet, dass** der Laufbahnabschnitt (3) als eine Rille für einen Wälzkörper ausgebildet ist.

3. Wälzlager mit mindestens einem Lagerring (1) nach einem der vorhergehenden Ansprüche, **dadurch gekennzeichnet, dass** das Wälzlager als ein Axialwälzlager ausgebildet ist.

4. Wälzlager nach Anspruch 3, **dadurch gekennzeichnet, dass** der Lagerring (1) aus einem Stahlwerkstoff mit der Bezeichnung E235 oder E235+N gebildet ist.

5. Verfahren zur Herstellung des Lagerrings (1) nach einem der vorhergehenden Ansprüche, **dadurch gekennzeichnet, dass** der Lagerring (1) durch ein Presswerkzeug aus einem Rohr-Vorformling (13) umgeformt wird.

6. Verfahren zur Herstellung des Lagerrings (1) nach Anspruch 5, **dadurch gekennzeichnet, dass** der Rohr-Vorformling (13) aus einem geraden Rohr (11) gebogen wird, wobei Enden des gebogenen Rohres miteinander zu dem Rohr-Vorformling (13) verschweißt oder anderweitig thermisch verbunden werden.

7. Verfahren zur Herstellung des Lagerrings (1) nach den Ansprüchen 5 und 6, **dadurch gekennzeichnet, dass** der Lagerring (1) nach dem Umformen geprägt wird, um eine Anlauffläche (9) für einen Käfig oder eine Dichtscheibe zu bilden.

8. Verfahren zur Herstellung eines Lagerrings (1) nach einem der Ansprüche 5 bis 7, **dadurch gekennzeichnet, dass** der Lagerring (1) nach dem Umformen durch Schleifen weiterbearbeitet wird.

9. Verfahren zur Herstellung eines Lagerrings (1) nach einem der Ansprüche 5 bis 8, **dadurch gekennzeichnet, dass** der Lagerring (1) gehärtet oder beschichtet wird.

10. Verfahren zur Herstellung eines Lagerrings (1) nach Anspruch 9, **dadurch gekennzeichnet, dass** der Lagerring (1) mit Kunststoff umspritzt wird.

## Claims

1. Bearing ring (1) for an anti-friction bearing, the bearing ring (1) defining a main axis (A), the bearing ring (1) being configured as a cavity which runs around the main axis (A), a wall of the hollow ring being of single-piece and/or seamless configuration in an axial section along the main axis (A), the bearing ring (1) being configured for rolling bodies to roll on, the wall having a raceway section (3) for the rolling bodies to roll on, a bearing bottom section (6) for supporting the bearing ring (1), two side supporting wall sections (7) and two connecting sections (8) for connecting the two side supporting wall sections (7) to the raceway section (3), **characterized in that** the cavity has two cavity sections (10), the wall enclosing the two cavity sections (10), and **in that** the raceway section (3) lies on the bearing bottom section (6), the bearing bottom section (6) supporting the raceway section (3).

2. Bearing ring (1) according to Claim 1, **characterized in that** the raceway section (3) is configured as a groove for a rolling body.

3. Anti-friction bearing having at least one bearing ring (1) according to either of the preceding claims, **characterized in that** the anti-friction bearing is configured as an axial anti-friction bearing.

4. Anti-friction bearing according to Claim 3, **characterized in that** the bearing ring (1) is formed from a steel material with the designation E235 or E235+N.

5. Method for producing the bearing ring (1) according to one of the preceding claims, **characterized in that** the bearing ring (1) is formed from a tubular preform (13) by way of a pressing tool.

6. Method for producing the bearing ring (1) according to Claim 5, **characterized in that** the tubular preform (13) is bent from a straight tube (11), ends of the bent tube being welded or being connected thermally in some other way to one another to form the tubular preform (13) .

7. Method for producing the bearing ring (1) according to Claims 5 and 6, **characterized in that** the bearing ring (1) is stamped after the forming, in order to form a run-on surface (9) for a cage or a sealing washer.

8. Method for producing a bearing ring (1) according to one of Claims 5 to 7, **characterized in that** the bearing ring (1) is machined further by way of grinding after the forming.

9. Method for producing a bearing ring (1) according to one of Claims 5 to 8, **characterized in that** the bearing ring (1) is hardened or coated.

10. Method for producing a bearing ring (1) according to Claim 9, **characterized in that** the bearing ring (1) is overmoulded with plastic.

## Revendications

1. Bague de palier (1) pour un palier à roulement, la bague de palier (1) définissant un axe principal (A), la bague de palier (1) étant réalisée sous la forme d'une bague creuse comprenant un espace creux entourant l'axe principal (A), une paroi de la bague creuse étant réalisée d'un seul tenant et/ou sans couture dans une coupe axiale le long de l'axe principal (A), la bague de palier (1) étant configurée pour le roulement d'éléments de roulement, la paroi possédant une portion de chemin de roulement (3) destinée au roulement des éléments de roulement, une portion de fond de palier (6) servant à l'appui de la bague de palier (1), deux portions de paroi de soutien latérale (7) et deux portions de liaison (8) destinées à relier les deux portions de paroi de soutien latérale (7) à la portion de chemin de roulement (3), **caractérisée en ce que** l'espace creux possède deux portions d'espace creux (10), la paroi renfermant les deux portions d'espace creux (10), et **en ce que** la portion de chemin de roulement (3) repose sur la portion de fond de palier (6), la portion de fond de palier (6) soutenant la portion de chemin de roulement (3).

2. Bague de palier (1) selon la revendication 1, **caractérisée en ce que** la portion de chemin de roulement (3) est réalisée sous la forme d'une rainure pour un élément de roulement.

3. Palier à roulement comprenant au moins une bague de palier (1) selon l'une des revendications précédentes, **caractérisé en ce que** le palier à roulement est réalisé sous la forme d'un palier à roulement axial.

4. Palier à roulement selon la revendication 3, **caractérisé en ce que** la bague de palier (1) est constituée d'un matériau d'acier portant la désignation E235 ou E235+N.

5. Procédé de fabrication de la bague de palier (1) selon l'une des revendications précédentes, **caractérisé en ce que** la bague de palier (1) est façonnée par un outil de pressage à partir d'une préforme tubulaire (13).

6. Procédé de fabrication de la bague de palier (1) selon la revendication 5, **caractérisé en ce que** la préforme tubulaire (13) est cintrée à partir d'un tube rectiligne (11), les extrémités du tube cintré étant soudées l'une à l'autre ou assemblées thermiquement d'une autre manière afin d'obtenir la préforme tubulaire (13).

7. Procédé de fabrication de la bague de palier (1) selon l'une des revendications 5 et 6, **caractérisé en ce que** la bague de palier (1) est estampée après le façonnage afin de former une surface d'amorce (9) pour une cage ou une rondelle d'étanchéité.

8. Procédé de fabrication d'une bague de palier (1) selon l'une des revendications 5 à 7, **caractérisé en ce que** la bague de palier (1), après le façonnage, est soumise à un traitement ultérieur par rectification.

9. Procédé de fabrication d'une bague de palier (1) selon l'une des revendications 5 à 8, **caractérisé en ce que** la bague de palier (1) est trempée ou revêtue.

10. Procédé de fabrication d'une bague de palier (1) selon la revendication 9, **caractérisé en ce que** la bague de palier (1) est surmoulée avec une matière plastique.
